(19) Europäisches Patentamt
European Patent Office
Office européen des brevets

(11) **EP 4 385 334 A1**

(12) **EUROPEAN PATENT APPLICATION**
published in accordance with Art. 153(4) EPC

(43) Date of publication:
**19.06.2024 Bulletin 2024/25**

(21) Application number: **22856245.0**

(22) Date of filing: **11.08.2022**

(51) International Patent Classification (IPC):
*A23G 3/48* (2006.01)   *A23L 17/60* (2016.01)
*A23G 3/42* (2006.01)   *A23L 29/20* (2016.01)
*A23L 29/231* (2016.01)   *A23L 29/212* (2016.01)
*A23L 29/256* (2016.01)   *A23L 29/238* (2016.01)
*A23L 29/281* (2016.01)   *A23L 29/269* (2016.01)

(52) Cooperative Patent Classification (CPC):
A23G 3/42; A23G 3/48; A23L 17/60; A23L 29/20;
A23L 29/212; A23L 29/231; A23L 29/238;
A23L 29/256; A23L 29/269; A23L 29/281;
A23L 29/30

(86) International application number:
**PCT/KR2022/012020**

(87) International publication number:
**WO 2023/018252 (16.02.2023 Gazette 2023/07)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **11.08.2021   KR 20210106318**

(71) Applicant: **CJ CheilJedang Corporation
Seoul 04560 (KR)**

(72) Inventors:
• **LIM, Hyung Soo
Seoul 04560 (KR)**
• **KIM, Hoo Sik
Seoul 04560 (KR)**
• **PARK, Hong Wook
Seoul 04560 (KR)**

(74) Representative: **Cabinet Laurent & Charras
Le Contemporain
50 Chemin de la Bruyère
69574 Dardilly Cedex (FR)**

(54) **LAVER SNACK HAVING CHEWY TEXTURE, AND PREPARATION METHOD THEREFOR**

(57)     The present application provides a laver snack, comprising: seasoned laver; a binder comprising saccharides and a gelling agent; and solid supplementary ingredients. In addition, the present application provides a method for preparing a laver snack, comprising the steps of: mixing a binder in which saccharide and a gelling agent are mixed, seasoned laver, and solid supplementary ingredients; and shaping the mixed resultant product and cooling same.

【Figure 1】

EP 4 385 334 A1

**Description**

[Technical Field]

The present application relates to a laver snack and a preparation method therefor.

[Background Art]

Laver has a protein content higher than regular seaweed and is rich in amino acids such as alanine, aspartic acid, glutamic acid, and glycine. In addition, the laver is known as a healthy food due to its high dietary fiber content, and is an excellent seaweed food with various nutrients that are helpful in suppressing adult diseases, skin care, and cancer prevention.

Laver snacks are mostly products that have a crunchy texture generally by drying laver as a main ingredient, coating the surface of the laver with seasoning or syrup, or adding ingredients such as almonds between the lavers to make it into a sand or frying the laver. In addition, most of the laver snack products are prepared in a sheet shape and thus break easily, and thus are excessively packaged to compensate for this problem, which results in the incurring of high packaging costs and the lowering of efficiency during storage and distribution.

Recently, as customers' demands on and interest in new textures have increased, there is a need to develop a laver snack having a new texture that is different from conventional laver snacks. In addition, there is a need to develop a laver snack that does not break easily and requires less packaging, so packaging and storage costs can be reduced, and has less risk of product damage even during storage and distribution.

[Prior Art Documents]

[Patent Documents]

(Patent Document 1) Korean Laid-open Patent Publication No. 10-2020-0059440 (May 29, 2020)

[Disclosure]

[Technical Problem]

It is an object of the present application to provide a laver snack having a new texture that is soft and chewy, breaking away from an existing crispy texture.

It is another object of the present application to provide a preparation method of the laver snack.

[Technical Solution]

In order to solve the problem, the present application provides a laver snack, comprising: (a) seasoned laver; (b) a binder comprising saccharides and a gelling agent; and (c) solid ingredients.

In addition, the present application provides a preparation method of a laver snack, comprising: preparing a binder by mixing saccharides and a gelling agent; mixing the binder and seasoned laver; and shaping and cooling the mixed resultant product.

Hereinafter, the present application will be described in detail.

An aspect of the present application provides a laver snack.

The laver snack of the present invention comprises seasoned laver; a binder comprising saccharides and a gelling agent; and solid supplementary ingredients.

The laver snack may be in a form in which the seasoned laver, the binder, and the solid supplementary ingredients are not present in a fixed location, but are randomly mixed. Specifically, the laver snack may be a form in which the seasoned laver, the binder, and the solid supplementary ingredients are randomly distributed and the solid supplementary ingredients are interposed between the seasoned lavers. The laver snack is distinguished from a laver snack in which the laver and the solid supplementary ingredients are uniformly stacked by locating the solid supplementary ingredients between plate-shaped lavers.

In addition, even though the sizes of the laver snacks are similar to each other, their appearances may be different.

The 'seasoned laver' generally refers to laver prepared by roasting or frying seasoned laver with cooking oil, and the seasoned laver refers to amorphous laver unlike general sheet-shaped dried laver, which is prepared by washing, cutting, and drying cultured watery laver. A raw material of the seasoned laver may be stone laver, traditional laver, or green laver, but more specifically, may be mostly stone laver. For example, the seasoned laver may contain 90% or more of stone laver. The seasoned laver is characterized by having a rough and tough texture due to the high content of stone laver.

The seasoned laver may be contained in an amount of 10 to 80 parts by weight, 10 to 75 parts by weight, 10 to 70 parts by weight, or 20 to 60 parts by weight based on the total 100 parts by weight of the laver snack, but is not limited thereto.

The 'binder' means that it is located between the seasoned laver and the solid supplementary ingredients, between the seasoned laver and the seasoned laver, and between the solid supplementary ingredients and the solid supplementary ingredients so as to be able to bind them well and maintain a certain shape.

The binder comprises saccharides and a gelling agent.

The gelling agent may be at least one selected from the group consisting of agar, gelatin, pectin, alginate, carrageenan, xanthan gum, locust bean gum, guar gum, and modified starch.

The gelling agent may be contained in an amount of 0.5 to 20 parts by weight, 0.5 to 15 parts by weight, 0.5 to 10 parts by weight, 0.5 to 5 parts by weight, 3 to 30 parts by weight, 3 to 15 parts by weight, or 3 to 10 parts by weight, based on the total 100 parts by weight of the laver snack.

When using gelatin or modified starch as the gelling agent, the gelling agent may be contained in an amount of 3 to 20 parts by weight, 3 to 15 parts by weight, 3 to 12 parts by weight, 3 to 10 parts by weight, 3 to 9 parts by weight, 6 to 20 parts by weight, 6 to 15 parts by weight, 6 to 12 parts by weight, 6 to 9 parts by weight, 9 to 20 parts by weight, 9 to 15 parts by weight, or 9 to 12 parts by weight, based on the total 100 parts by weight of the laver snack.

When using agar, carrageenan, or pectin as the gelling agent, the gelling agent may be contained in an amount of 0.5 to 5 parts by weight, 0.5 to 4 parts by weight, 0.5 to 3 parts by weight, 0.5 to 2.5 parts by weight, 0.5 to 2 parts by weight, 0.5 to 1.5 parts by weight, 0.5 to 1.2 parts by weight, 1 to 5 parts by weight, 1 to 4 parts by weight, 1 to 3 parts by weight, 1 to 2.5 parts by weight, 1 to 2 parts by weight, 1 to 1.5 parts by weight, 1.5 to 5 parts by weight, 1.5 to 4 parts by weight, 1.5 to 3 parts by weight or 1.5 to 2.5 parts by weight, based on the total 100 parts by weight of the laver snack.

When the gelling agent is included in the above range of content, not only a texture with springiness and chewiness may be achieved, but also shaping and workability may be further improved.

The saccharides may be any one or more selected from the group consisting of sucrose, starch syrup, maltose, glucose, corn syrup, xylitol, sorbitol, mannitol, lactitol, polyglycitol, erythritol, maltitol, isomalt, isomaltooligosaccharide, xylooligosaccharide, fructooligosaccharide, and lactooligosaccharide.

The saccharides may be contained in an amount of 10 to 40 parts by weight, 20 to 40 parts by weight, 10 to 30 parts by weight, or 20 to 30 parts by weight, based on the total 100 parts by weight of the laver snack.

The binder comprises the saccharides and the gelling agent, and the content of the gelling agent in the binder may be 0.01 to 5 wt%, 0.01 to 4 wt%, 0.01 to 3 wt%, 0.01 to 2 wt%, 0.01 to 1 wt%, 0.1 to 5 wt%, 0.1 to 4 wt%, 0.1 to 3 wt%, 0.1 to 2 wt%, 0.1 to 1 wt%, 0.3 to 1 wt%, 0.5 to 5 wt%, 0.5 to 4 wt%, 0.5 to 3 wt%, 0.5 to 2 wt%, 0.5 to 1 wt%, 1 to 5 wt%, 1 to 4 wt%, 1 to 3 wt%, or 1 to 2 wt%, based on the total weight of the binder. The content of the gelling agent in the binder may vary depending on the type of gelling agent.

When using agar, carrageenan, or pectin as the gelling agent, the content of the gelling agent in the binder may be 0.01 to 0.5 wt%, 0.01 to 0.4 wt%, 0.01 to 0.3 wt%, 0.01 to 0.2 wt%, 0.01 to 0.1 wt%, 0.05 to 0.5 wt%, 0.05 to 0.4 wt%, 0.05 to 0.3 wt%, 0.05 to 0.2 wt% or 0.05 to 0.1 wt%, based on the total weight of the binder.

When using gelatin or modified starch as the gelling agent, the content of the gelling agent in the binder may be 0.5 to 5 wt%, 0.5 to 4 wt%, 0.5 to 3 wt%, 0.5 to 2 wt%, 0.5 to 1 wt%, 1 to 5 wt%, 1 to 4 wt%, 1 to 3 wt%, or 1 to 2 wt%, based on the total weight of the binder.

When the content of the gelling agent in the binder is in the above range, not only a texture with springiness and chewiness may be achieved, but also shaping and workability may be further improved.

The solid supplementary ingredients are not limited thereto, but may be any one or more selected from the group consisting of dried nuts, dried grains, dried fruits, dried meat jerky, and dried fish jerky.

The dried nuts may be any one or more nuts selected from the group consisting of almonds, peanuts, sesame seeds, black sesame seeds, walnuts, and cashew nuts, but are not limited thereto.

The dried grains may be any one or more grains selected from the group consisting of brown rice, brown glutinous rice, wheat, oats, barley, rye, corn, buckwheat, sorghum, adlay, black soybean, white soybean, and red bean, but are not limited thereto.

The dried fruits may be any one or more fruits selected from the group consisting of cranberry, strawberry, mango, apricot, plum, peach, tangerine, orange, grape, blueberry, apple, pear, banana, persimmon, watermelon, melon, quince, tomato, pomegranate, melon, pineapple, kiwi and green plum, but are not limited thereto.

The dried meat jerky may be prepared from any one or more raw meat selected from the group consisting of beef, pork, lamb, goat meat, rabbit meat, chicken, duck meat, pheasant meat, turkey meat, and kangaroo meat, but is limited thereto.

The dried fish jerky may be prepared from any one fish meat selected from the group consisting of squid, cuttlefish, sardines, filefish fillets, young pollack, octopus, webfoot octopus, and anchovies, but is not limited thereto.

The solid supplementary ingredients may be contained in an amount of 1 to 75 parts by weight, based on the total 100 parts by weight of the laver snack, and specifically, may be contained in an amount of 50 parts by weight or less to preserve the characteristics of laver, but are not limited thereto.

The mixture of the seasoned laver and the solid supplementary ingredients and the binder may be included in the weight ratio of 1:4 to 4:1, 1:3 to 3:1, or 2:3 to 3:2, but is not limited thereto.

The laver snack of the present application may have improved physical properties related to softness and chewiness. Specifically, as the laver snack has lower hardness and higher cohesiveness, springiness and moisture content, it is advantageous in that a laver snack having a new texture by embodying soft, springier, and chewy textures rather than a crispy texture of existing laver snacks can be provided.

The hardness refers to a force required to reach a desired deformation, and in the laver snack, the lower the value of hardness, the less hard and the softer the texture is maintained. The hardness of the laver snack of the present application was reduced compared to a laver snack without containing the gelling agent or with a certain amount of gelling agent, and the measured hardness may be 5000 to 30000 g, 5000 to 29000 g, 5000 to 25000 g, 5000 to 20000 g, 10000 to 29000 g, 10000 to 25000 g, or 10000 to 20000 g.

The cohesiveness refers to a force of an object to maintain its original shape, and in the case of laver snack, the higher the value of cohesiveness, the less the shape breaks and the more it maintains its shape. The cohesiveness of the laver snack of the present application increased compared to the laver snack without containing the gelling agent or with a certain amount of gelling agent, and the measured cohesiveness may be 0.25 or more, specifically 0.25 to 1.0, 0.25 to 0.8, 0.25 to 0.6, or 0.25 to 0.5.

The springiness refers to a property of an object deformed by physical force to return to its original state after the force is removed, and in the case of the laver snack, the higher the springiness, the chewier the texture is enhanced. The springiness of the laver snack of the present application increased compared to the laver snack without containing the gelling agent or with a certain amount of gelling agent, and the measured springiness may be 65% or more, specifically 65 to 95%, 65 to 90%, 65 to 85%, or 65 to 80%.

The moisture content refers to the moisture content of laver in the laver snack, and in the case of the laver snack, the higher the value of the moisture content, it is advantageous in terms of showing a softer texture. The moisture content of laver in the laver snack of the present application may be 5 wt% or more, specifically 5 to 20 wt%, 5 to 17 wt%, 5 to 15 wt%, 5 to 14 wt%, 5 to 13 wt%, 5 to 12 wt%, 5 to 10 wt%, or 5 to 9 wt%. The moisture content may be calculated by measuring the mass of laver in the laver snack before and after being left at 105°C for 20 hours.

Another aspect of the present application provides a preparation method of a laver snack.

The preparation method of the laver snack of the present application comprises mixing a binder in which saccharides and a gelling agent are mixed, seasoned laver, and solid supplementary ingredients; and shaping and cooling the mixed resultant product.

The details regarding binder, the saccharides, the gelling agent, the seasoned laver, the solid supplementary ingredients and the contents thereof are the same as described above.

The preparing of the binder may include a process of hydrating the gelling agent and then mixing and stirring the saccharides, or mixing the gelling agent and the saccharides and then heating and completely dissolving the mixture, but is not limited thereto. When the mixture of the gelling agent and the saccharides is dissolved by heating, heating at 30°C to 100°C may be included, but is not limited thereto.

The shaping and cooling of the mixed resultant product refers to a process of injecting and hardening the mixed resultant product into a shaping molder, and the shaping refers to shaping the mixture through a predetermined force. The cooling may include performing the cooling at room temperature or refrigerated temperature, and specifically, the cooling may be performed under room temperature conditions for a sufficient period of time.

[Advantageous Effects]

A laver snack according to the present application has an effect of improving a soft and chewy texture, unlike conventional laver snacks, by adding a binder containing saccharides and a gelling agent.

In addition, various soft and chewy textures can be achieved depending on the type and content of the gelling agent.

The effects of the present application are not limited to the effects mentioned above, and other effects not mentioned will be clearly understood by those skilled in the art from the following description.

[Description of Drawings]

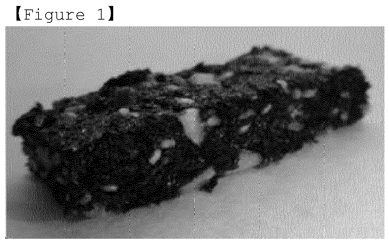

FIG. 1 is a photograph of a laver snack prepared by a method of the present application.

[Best Mode]

Hereinafter, the present application will be described in detail by Examples and Experimental Examples. However, the following Examples and Experimental Examples are only for illustrating the present invention, and the contents of the present invention are not limited by the following Examples and Experimental Examples.

**[Examples]**

**Preparation of Laver snack**

<u>Example 1-1></u>

First, a laver snack composition was prepared with a composition and a mixing ratio as shown in [Table 1] below.
Specifically, water was added to sugar(sucrose), agar, refined salt, and starch syrup, mixed well, and then hydrated with heat at 90°C to prepare a binder. Next, butter was melted in a frying pan, added with Crushed almond, stir-fried, and then added and mixed with seasoned laver (Bibigo Korean soysauce seasoned laver, CJ Cheil Jedang), and agglomerated with the binder to prepare a laver snack composition. The laver snack composition was shaped using a molder and then cooled at room temperature to complete the laver snack.

<u>Example 1-2></u>

A laver snack composition and a laver snack were prepared in the same manner as in Example 1-1, except that gelatin was added instead of agar when preparing the binder.

**<Comparative Example>**

A laver snack composition and a laver snack were prepared in the same manner as in Example 1-1, except that a gelling agent was not added when preparing the binder.

[Table 1]

| Classification | Comparative Example (gelling agent X) | Preparation Example 1 (agar) | Preparation Example 2 (gelatin) |
|---|---|---|---|
| Crushed almond | 35 | 35 | 35 |
| Seasoned laver | 25 | 25 | 25 |
| Lecithin | 0.3 | 0.3 | 0.3 |
| Butter | 3 | 3 | 3 |
| Starch syrup | 36.3 | 14 | 12 |
| Sugar (Sucrose) | - | 10.8 | 9.3 |
| Refined salt | 0.4 | 0.4 | 0.4 |
| Agar | - | 1.5 | - |
| Gelatin | - | - | 6 |
| Water | - | 10 | 9 |
| Total | 100 | 100 | 100 |
| (Unit: parts by weight) | | | |

<u>Examples 2-1 to 2-4></u>

Laver snack compositions and laver snacks were prepared in the same manner as in Example 1-1, except the ratio of agar was changed to compositions and mixing ratios as shown in [Table 2] below.

[Table 2]

| | Example 2-1 | Example 2-2 | Example 2-3 | Example 2-4 |
|---|---|---|---|---|
| Crushed almond | 35 | 35 | 35 | 35 |
| Seasoned laver | 25 | 25 | 25 | 25 |
| Lecithin | 0.3 | 0.3 | 0.3 | 0.3 |
| Butter | 3 | 3 | 3 | 3 |
| Oligosaccharide | 14 | 14 | 14 | 14 |
| White sugar (Sucrose) | 10.8 | 10.8 | 10.8 | 10.8 |
| Refined salt | 0.4 | 0.4 | 0.4 | 0.4 |
| Agar | 0.7 | 1.2 | 1.5 | 2.3 |
| Water | 10 | 10 | 10 | 10 |
| (Unit: parts by weight) | | | | |

<Examples 3-1 to 3-5>

Laver snack compositions and laver snacks were prepared in the same manner as in Example 1-2, except the ratio of gelatin was changed to compositions and mixing ratios as shown in [Table 3] below.

[Table 3]

| | Example 3-1 | Example 3-2 | Example 3-3 | Example 3-4 | Example 3-5 |
|---|---|---|---|---|---|
| Crushed almond | 35 | 35 | 35 | 35 | 35 |
| Seasoned laver | 25 | 25 | 25 | 25 | 25 |
| Lecithin | 0.3 | 0.3 | 0.3 | 0.3 | 0.3 |
| Butter | 3 | 3 | 3 | 3 | 3 |
| Oligosaccharide | 12 | 12 | 12 | 12 | 12 |
| White sugar(Sucrose) | 9.3 | 9.3 | 9.3 | 9.3 | 9.3 |
| Refined salt | 0.4 | 0.4 | 0.4 | 0.4 | 0.4 |
| Gelatin | 3 | 6 | 9 | 12 | 15 |
| Water | 4.5 | 9 | 13.5 | 18 | 22.5 |
| (Unit: parts by weight) | | | | | |

**[Experimental Example 1]**

**Confirmation of physical properties and texture improving effect of laver snack added with gelling agent**

1-1. Texture analysis of laver snack

For the laver snacks prepared in Examples 1-1 and 1-2 and the Comparative Example, hardness, cohesiveness, and springiness were measured using a texture analyzer (TA.XT plus, Stable Micro Systems Ltd., UK), and measured a total of three times under the same conditions, and then average values were shown in [Table 4] .

The texture analyzer mimicked the action of a person chewing twice in the mouth. A cylinder metal probe of the texture analyzer descended vertically to a food sample at a controlled speed at a controlled distance. Next, the probe ascended again by a pre-controlled distance and descended again for a second chewing. A force sensing device and a transducer recognize the force applied to the measurement sample and transmit the data (force value, operating time, probe moving distance) to a computer. Definition of physical property measurement terms and physical property measurement conditions are as follows:

[Definition of texture measurement terms]

Hardness is a force required to reach a desired deformation, and refers to a physical property that indicates the hardness and softness of a material.

Cohesiveness is a force of an object to maintain its original shape, and refers to a force required for the internal binding constituting a food shape.

Springiness refers to a property of a deformed sample desired to return to its original state after the force is removed.

[Measuring conditions]

A cylindrical probe with a diameter of 10 mm was used under conditions of a pre-test speed of 1.0 mm/s at which the probe descends to the sample, a test speed of 1.0 mm/s at which the probe is in contact with the surface of the sample and then penetrates into the sample, a post-test speed of 1.0 mm/s at which the probe penetrates into the sample and then returns to its original position, and strain mode 75%.

[Table 4]

|  | Hardness | Cohesiveness | Springiness |
|---|---|---|---|
| Comparative Example | 39028.017 | 0.268 | 52.322 |
| Example 1-1 | 10147.028 | 0.338 | 79.681 |
| Example 1-2 | 24304.015 | 0.418 | 79.669 |

As a result, it can be seen that the Comparative Example without adding the gelling agent has high hardness and low springiness to have a hard texture, and has low springiness and cohesiveness to have a breaking texture. Meanwhile, it can be seen that Examples 1-1 and 1-2 to which the gelling agent was added show a significant difference in hardness according to the characteristics of the gelling agent, but show lower hardness and higher springiness compared to the Comparative Example, giving a softer and chewier texture. This is a different texture from conventional laver snacks.

1-2. Sensory evaluation of texture of laver snack

Sensory evaluation of the texture was conducted on the laver snacks prepared in Examples 1-1, 1-2, and the Comparative Example above.

Specifically, the laver snacks of the Comparative Example and Examples 1-1 and 1-2 were eaten by 30 trained professional panelists, and then the preferences for hardness, crunchiness, and chewiness of the laver snacks were evaluated. Each time the evaluation of one sample was completed, the mouth was washed with water, and the next sample was evaluated after 1 minute had elapsed, and the higher the preference or strength, the closer to 5 points from 0 point. The results were shown in [Table 5].

[Table 5]

|  | Hardness | Crunchiness | Chewiness |
|---|---|---|---|
| Comparative | 4.4 | 3.8 | 1.9 |
| Example |  |  |  |
| Example 1-1 | 2.4 | 1.9 | 3.4 |
| Example 1-2 | 3.4 | 2.6 | 4.3 |

As a result, it was confirmed that a laver snack prepared with a laver snack composition without adding the gelling agent had a hard and crunchy texture, while a laver snack prepared with a laver snack composition added with the gelling agent had a soft and chewy texture.

1-3. Confirmation of moisture content of laver snack

For the laver snacks prepared in Examples 1-1 and 1-2, and the Comparative Example, the moisture content was measured and measured using a dry oven by placing the laver portion excluding almonds from the laver snack on a weighing dish.

Specifically, a dish containing the sample was left at 105°C for 20 hours, and then the mass before and after drying was measured, and the moisture content was calculated according to the following [Equation 1]. In addition, the solid content contained in the laver snack was calculated according to the following [Equation 2], and the results were shown in [Table 6].

Moisture content (%) = [(mass of weighing dish and sample before drying) - (mass of weighing dish and sample after drying)] / mass of sample X 100     [Equation 1]

[Equation 2]

Solid content (%) = 100 - Moisture content (%)

[Table 6]

|  |  | Moisture content (%) of laver | Solid content (%) |
|---|---|---|---|
| Comparative Example | Laver + ingredients | 7.23 | 92.77 |
| Example 1-1 | Laver + ingredients | 7.82 | 92.18 |
| Example 1-2 | Laver + ingredients | 8.22 | 91.78 |

As a result, although Example 1-1 and the Comparative Example have similar moisture contents, but have moisture contents relatively different from Example 1-2, since the hardness depending on the moisture content, which is shown in [Table 4] and [Table 5] above, has no significant difference, it is shown that the moisture content of each laver composition did not affect the physical properties.

**[Experimental Example 2]**

**Confirmation of effect of improving texture of laver snacks according to added amount of agar**

1-1. Texture analysis of laver snack

For the laver snacks prepared in Examples 2-1 to 2-4 above, the texture was evaluated in the same manner as in Experimental Example 1-1 above. The result was shown in [Table 7] below.

[Table 7]

|  | Hardness | Cohesiveness | Springiness |
|---|---|---|---|
| Example 2-1 | 5463.719 | 0.164 | 70.350 |
| Example 2-2 | 8930.494 | 0.301 | 77.404 |
| Example 2-3 | 10147.028 | 0.338 | 79.681 |
| Example 2-4 | 11902.074 | 0.308 | 80.996 |

As a result, it can be seen that the hardness increases as the content of the gelling agent increases. It can be seen that the cohesiveness shows similar numerical values except for Example 2-1. It can be seen that the springiness increases as the content of the gelling agent increases. From this result, it can be seen that when a certain amount or more of agar is used, the hardness and the cohesiveness show similar numerical values, and as the agar content increases, the springiness increases. In addition, referring to the numerical values of Example 2-1, since the gelling agent content is small, a force that binds the laver and the ingredients is small, and as a result, the overall numerical values are different from Examples 2-2, 2-3, and 2-4.

2-2. Measurement of moisture content of laver snacks

For the laver snacks prepared in Examples 2-1 to 2-4 above, the moisture content was measured and calculated in the same manner as in Experimental Example 1-3 above. The result was shown in [Table 8] below.

[Table 8]

|  | Moisture content (%) | Solid content (%) |
|---|---|---|
| Example 2-1 | 9.16 | 90.84 |
| Example 2-2 | 10.39 | 89.61 |
| Example 2-3 | 10.18 | 89.82 |
| Example 2-4 | 11.69 | 88.31 |

As a result, the moisture content of laver contained in the laver snack to which agar is added as a gelling agent was shown to be 9.16 to 11.69 wt%, and it can be seen that when the moisture content of laver is within the above range, the laver contained in the laver snack gives a soft texture.

**[Experimental Example 3]**

**Confirmation of effect of improving texture of laver snacks according to added amount of gelatin**

3-1. Texture measurement of laver snack

For the laver snacks prepared in Examples 3-1 to 3-5 above, the texture was evaluated in the same manner as in Experimental Example 1-1 above. The results were shown in [Table 9] below.

[Table 9]

|  |  | Hardness | Cohesiveness | Springiness |
|---|---|---|---|---|
| Example 3-1 | 3% | 29024.873 | 0.304 | 66.418 |
| Example 3-2 | 6% | 24304.015 | 0.418 | 79.669 |
| Example 3-3 | 9% | 19734.720 | 0.440 | 81.772 |
| Example 3-4 | 12% | 14156.986 | 0.548 | 81.888 |
| Example 3-5 | 15% | 12628.143 | 0.546 | 87.756 |

As a result, it can be seen that the hardness decreases as the content of the gelling agent increases. This is because there is a difference in the moisture ratio for each Example for gelatin hydration, and as shown in the results in Table 9, the hardness is shown to decrease as the moisture increases. It can be seen that the cohesiveness increases as the content of the gelling agent increases. It can be seen that the springiness increases as the content of the gelling agent increases through the results of Table 9. As a result, it can be seen that as the gelatin content increases, the hardness decreases, and the cohesiveness and the springiness increase to give a chewy texture.

3-2. Measurement of moisture content of laver snacks

For the laver snacks prepared in Examples 3-1 to 3-5 above, the moisture content was measured and calculated in the same manner as in Experimental Example 1-3 above. The results was shown in [Table 10] below.

[Table 10]

|  | Moisture content (%) | Solid content (%) |
|---|---|---|
| Example 3-1 | 5.78 | 91.78 |
| Example 3-2 | 7.62 | 92.38 |
| Example 3-3 | 10.13 | 89.87 |
| Example 3-4 | 11.36 | 88.64 |
| Example 3-5 | 13.46 | 86.54 |

As a result, the moisture content of laver contained in the laver snack to which gelatin was added as a gelling agent was shown to be 5.78 to 13.46 wt%, and when the moisture content of laver is within the above range, it can be seen that the laver contained in the laver snack gives a soft texture.

The laver snack prepared without adding the gelling agent or with the low content of gelling agent from the above Examples is shown to have poor springiness, low cohesiveness, and a breaking texture due to low bonding strength, and as the content of the gelling agent increases, the springiness is shown to be increased to have a chewy texture. In addition, it is shown that when gelatin is applied according to the characteristics of each gelling agent, springiness is suitable to give a chewier texture due to the strong springiness, and it is suitable to use agar to impart both the soft texture and the chewy texture.

Accordingly, it can be seen that by using various gelling agents, laver snacks having various chewy textures can be prepared and show a significant difference in physical properties from the laver snack to which the gelling agent is not added.

**Claims**

1. A laver snack, comprising: (a) seasoned laver; (b) a binder comprising saccharides and a gelling agent; and (c) solid supplementary ingredients.

2. The laver snack of claim 1, wherein the seasoned laver is prepared by processing laver containing stone laver in a seasoned form.

3. The laver snack of claim 1, wherein the gelling agent is any one or more selected from the group consisting of agar, gelatin, pectin, alginate, carrageenan, xanthan gum, locust bean gum, guar gum, and modified starch.

4. The laver snack of claim 1, wherein the gelling agent is contained in an amount of 0.5 to 20 parts by weight based on the total 100 parts by weight of the laver snack.

5. The laver snack of claim 1, wherein the saccharides are any one or more selected from the group consisting of sucrose, starch syrup, maltose, glucose, corn syrup, xylitol, sorbitol, mannitol, lactitol, polyglycitol, erythritol, maltitol, isomalt, isomaltooligosaccharide, xylooligosaccharide, fructooligosaccharide, and lactooligosaccharide.

6. The laver snack of claim 1, wherein the saccharides are contained in an amount of 20 to 40 parts by weight based on the total 100 parts by weight of the laver snack.

7. The laver snack of claim 1, wherein the solid supplementary ingredients are any one or more selected from the group consisting of dried nuts, dried grains, dried fruits, dried beef jerky, and dried fish jerky.

8. The laver snack of claim 1, wherein the solid supplementary ingredients are contained in an amount of 1 to 75 parts by weight based on total 100 parts by weight of the laver snack.

9. The laver snack of claim 1, wherein the mixture of the seasoned laver and the solid supplementary ingredients and the binder are contained in a weight ratio of 1:4 to 4:1.

10. The laver snack of claim 1, wherein the moisture content is 5 wt% or higher.

**11.** The laver snack of claim 1, wherein the springiness is 65% or higher.

**12.** The laver snack of claim 1, wherein the hardness is 5,000 g to 30,000 g.

**13.** The laver snack of claim 1, wherein the cohesiveness is 0.25 or higher.

**14.** A preparation method for a laver snack, comprising:

mixing a binder in which saccharides and a gelling agent are mixed, seasoned laver, and solid supplementary ingredients; and
shaping and cooling the mixed resultant product.

**15.** The preparation method for the laver snack of claim 14, wherein the binder is prepared by hydrating the gelling agent and mixing the hydrated gelling agent with the saccharides.

【Figure 1】

## INTERNATIONAL SEARCH REPORT

| International application No. |
|---|
| **PCT/KR2022/012020** |

**A.    CLASSIFICATION OF SUBJECT MATTER**

**A23G 3/48**(2006.01)i; **A23L 17/60**(2016.01)i; **A23G 3/42**(2006.01)i; **A23L 29/20**(2016.01)i; **A23L 29/231**(2016.01)i; **A23L 29/212**(2016.01)i; **A23L 29/256**(2016.01)i; **A23L 29/238**(2016.01)i; **A23L 29/281**(2016.01)i; **A23L 29/269**(2016.01)i

According to International Patent Classification (IPC) or to both national classification and IPC

**B.    FIELDS SEARCHED**

Minimum documentation searched (classification system followed by classification symbols)

A23G 3/48(2006.01); A23G 3/36(2006.01); A23G 3/52(2006.01); A23L 1/337(2006.01); A23L 17/60(2016.01); A23L 7/126(2016.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 자반형 김(roasted dry laver), 당류(sugar), 겔화제(gelling agent), 결착제(binder), 고형분(solid content), 김스낵(laver snack)

**C.    DOCUMENTS CONSIDERED TO BE RELEVANT**

| Category* | Citation of document, with indication, where appropriate, of the relevant passages | Relevant to claim No. |
|---|---|---|
| Y | KR 10-2018-0074974 A (SSIAL FOOD INC.) 04 July 2018 (2018-07-04)<br>See paragraphs [0034]-[0038], [0048], [0052], [0055] and [0057]; and claims 1-2 and 7-8. | 1-15 |
| Y | KR 10-2017-0046614 A (CHEONJIHAE ASSOCIATION CORP.) 02 May 2017 (2017-05-02)<br>See paragraphs [0039] and [0046]; and claim 1. | 1-15 |
| A | KR 10-2017-0016077 A (REPUBLIC OF KOREA(NATIONAL FISHERIES RESEARCH AND DEVELOPMENT INSTITUTE)) 13 February 2017 (2017-02-13)<br>See entire document. | 1-15 |
| A | KR 10-1954574 B1 (KIM, Yoon Ki) 22 May 2019 (2019-05-22)<br>See entire document. | 1-15 |
| A | JP 10-028560 A (OKI, Chikanosuke) 03 February 1998 (1998-02-03)<br>See entire document. | 1-15 |

☐ Further documents are listed in the continuation of Box C.      ☑ See patent family annex.

| | |
|---|---|
| *    Special categories of cited documents: | "T"   later document published after the international filing date or priority date and not in conflict with the application but cited to understand the principle or theory underlying the invention |
| "A"   document defining the general state of the art which is not considered to be of particular relevance | |
| "D"   document cited by the applicant in the international application | "X"   document of particular relevance; the claimed invention cannot be considered novel or cannot be considered to involve an inventive step when the document is taken alone |
| "E"   earlier application or patent but published on or after the international filing date | |
| "L"   document which may throw doubts on priority claim(s) or which is cited to establish the publication date of another citation or other special reason (as specified) | "Y"   document of particular relevance; the claimed invention cannot be considered to involve an inventive step when the document is combined with one or more other such documents, such combination being obvious to a person skilled in the art |
| "O"   document referring to an oral disclosure, use, exhibition or other means | |
| "P"   document published prior to the international filing date but later than the priority date claimed | "&"   document member of the same patent family |

| Date of the actual completion of the international search | Date of mailing of the international search report |
|---|---|
| **23 November 2022** | **23 November 2022** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
Information on patent family members

International application No.

**PCT/KR2022/012020**

| Patent document cited in search report | | | Publication date (day/month/year) | Patent family member(s) | | | Publication date (day/month/year) |
|---|---|---|---|---|---|---|---|
| KR | 10-2018-0074974 | A | 04 July 2018 | KR | 10-1949141 | B1 | 19 February 2019 |
| | | | | KR | 10-2018-0011006 | A | 31 January 2018 |
| | | | | KR | 10-2018-0074975 | A | 04 July 2018 |
| | | | | KR | 10-2065676 | B1 | 13 January 2020 |
| | | | | WO | 2018-016675 | A1 | 25 January 2018 |
| | | | | WO | 2018-016912 | A1 | 25 January 2018 |
| KR | 10-2017-0046614 | A | 02 May 2017 | KR | 10-2016-0016031 | A | 15 February 2016 |
| KR | 10-2017-0016077 | A | 13 February 2017 | KR | 10-1750247 | B1 | 11 July 2017 |
| KR | 10-1954574 | B1 | 22 May 2019 | US | 2021-0235718 | A1 | 05 August 2021 |
| | | | | WO | 2019-203614 | A1 | 24 October 2019 |
| JP | 10-028560 | A | 03 February 1998 | | None | | |

Form PCT/ISA/210 (patent family annex) (July 2022)

**REFERENCES CITED IN THE DESCRIPTION**

**Patent documents cited in the description**

- KR 1020200059440